(19) Europäisches Patentamt / European Patent Office / Office européen des brevets

(11) **EP 3 814 399 B1**

(12) **EUROPEAN PATENT SPECIFICATION**

(45) Date of publication and mention
of the grant of the patent:
**05.03.2025 Bulletin 2025/10**

(21) Application number: **19732068.2**

(22) Date of filing: **25.06.2019**

(51) International Patent Classification (IPC):
*C08G 63/00* (2006.01)   *C08G 63/08* (2006.01)
*C08G 63/78* (2006.01)

(52) Cooperative Patent Classification (CPC):
(C-Sets available)
**C08G 63/08; C08G 63/785; C08K 5/1575**   (Cont.)

(86) International application number:
**PCT/EP2019/066883**

(87) International publication number:
**WO 2020/002358 (02.01.2020 Gazette 2020/01)**

(54) **PROCESS FOR THE PREPARATION OF LACTIDE AND POLYLACTIDE MIXTURE**

VERFAHREN ZUR HERSTELLUNG VON LACTIDE UND POLYLACTIDE MISCHUNGEN

PROCÉDURE DE PRÉPARATION DE COMPOSITIONS DE LACTIDE ET POLYLACTIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.06.2018 EP 18179988**

(43) Date of publication of application:
**05.05.2021 Bulletin 2021/18**

(73) Proprietor: **TotalEnergies Corbion B.V.
4203 NS Gorinchem (NL)**

(72) Inventor: **GOBIUS DU SART, Gerrit
4171 DA Herwijnen (NL)**

(74) Representative: **De Clercq & Partners
Edgard Gevaertdreef 10a
9830 Sint-Martens-Latem (BE)**

(56) References cited:
**WO-A1-2015/086613       WO-A1-2016/041722
US-A1- 2016 280 908**

**(Cont. next page)**

(52) Cooperative Patent Classification (CPC): (Cont.)

C-Sets
**C08K 5/1575, C08L 67/04**

**Description**

**FIELD OF THE INVENTION**

The invention relates to a process for the preparation of a composition comprising polylactide and lactide.

**BACKGROUND OF THE INVENTION**

Polylactide, also referred as polylactic acid (PLA), is a synthetic aliphatic polyester derived from renewable resources, such a cane sugar, corn, sugar beet and cassava, which can furthermore be degraded under industrial composting conditions. There is currently a need in the industry to provide mixtures of lactide and PLA. This notably concerns applications where the articles require faster degradation kinetics than pure PLA with minimal amounts of lactide. In these applications up to tens of percents of lactide may be required.

US 2016/280908 describes a practicable continuous or batchwise process for the preparation of a crystallizable polylactic acid mixture. Lactic acid may be polycondensed to yield an oligomer, which may then be depolymerized to yield a crude lactide. The crude lactide may be purified to yield a pure lactide, wherein fractionation may be carried out in the purification into an L- or D-lactide-rich fraction and also a meso-lactide-rich fraction.

WO 2015/086613 describes an improved process for producing polylactide where the goal is to recover a maximum of useful matters in order to recycle without loss and so significantly improving the global yield of the production process of polylactide when starting from lactic acid.

WO 2016/041722 describes a method for stabilizing a condensed phase composition in a process of manufacturing a polyester from cyclic ester monomer comprising the steps of devolatilizing a reaction mixture, which contains i) at least one polymerizable cyclic ester, ii) at least one catalyst and optionally at least one initiator, to produce a vapor stream and a molten residue, wherein the vapor stream includes mainly i) the at least one polymerizable cyclic ester and ii) the at least one catalyst and/or the at least one initiator and/or a reaction product or a residue of the at least one catalyst and/or the at least one initiator and condensing the vapor stream to form the condensed phase composition, wherein at least one polymerization inhibitor is added as stabilizer to the reaction mixture and/or to the condensed phase composition in an amount so that the degree of conversion of the polymerizable cyclic ester in the condensed phase composition is not more than 15 %, wherein the degree of conversion is $100 \cdot (c0 - CF)/c0$, wherein c0 is the initial concentration of the cyclic ester in the condensed phase composition obtained by the condensation of the vapor stream and CF is the concentration of the cyclic ester in the condensed phase composition after addition of 150 ppm of tin octoate as catalyst and of 100 mmol/kg of ethylhexanol as initiator to the condensed phase composition and a subsequent heat treatment of condensed phase composition under inert atmosphere conditions for 12 hours at 160°C.

Currently, the industry can prepare these mixtures by compounding PLA with lactide monomer in a given ratio and then shaping the final mixture. There is therefore a need to improve the processes of the prior art.

**SUMMARY OF THE INVENTION**

In a first aspect, the present invention concerns a process for the preparation of a composition comprising polylactide and lactide by ring-opening polymerization of lactide, said process comprising the steps of : (a) providing lactide and polymerization catalyst to a reactor, (b) melt polymerizing said lactide to a degree of polymerization of at most 96.0 %, to form a composition comprising polylactide and lactide, and (c) removing said composition from the reactor, wherein the whole process is performed at pressures of at least 1 bar, and wherein the composition removed from the reactor is never subjected to a pressure below 1 bar.

The present invention also encompasses the use of a composition obtainable by the process according to the first aspect of the invention in applications where the composition degrades hydrolytically.

The present invention also encompasses the use of a composition obtainable by the present process in applications related to oil and gas production.

The present invention also encompasses the use of a composition obtainable by the present process as diverting agent.

The present invention also encompasses the use of a composition obtainable by the present process as an acid release agent.

The present inventors have found that it is possible to produce directly from any PLA polymerization plant such mixtures. The inventors have found that the desired lactide/PLA composition may be produced by making sure that during the whole production process, the produced PLA/lactide mixture is not subjected to a pressure below 1 bar. This process has significant benefits in terms of cost as a degassing step is avoided.

The above and other characteristics, features and advantages of the present invention will become apparent from the following detailed description, which illustrate, by way of example, the principles of the invention.

## DETAILED DESCRIPTION OF THE INVENTION

The term "alkyl", as a group or part of a group, refers to a hydrocarbyl group of formula $C_nH_{2n+1}$ wherein n is a number of at least 1. Alkyl groups may be linear, or branched and may be substituted as indicated herein. Generally, the alkyl groups comprise from 1 to 20 carbon atoms, preferably from 1 to 12 carbon atoms, preferably from 1 to 10 carbon atoms, preferably from 1 to 8 carbon atoms, preferably from 1 to 6 carbon atoms, more preferably 1, 2, 3, 4, 5, 6 carbon atoms. When a subscript is used herein following a carbon atom, the subscript refers to the number of carbon atoms that the named group may contain. For example, the term "$C_{1-20}$alkyl", as a group or part of a group, refers to a hydrocarbyl group of Formula $C_nH_{2n+1}$ wherein n is a number ranging from 1 to 20. Thus, for example, $C_{1-20}$alkyl groups include all linear, or branched alkyl groups having 1 to 20 carbon atoms, and thus includes for example methyl, ethyl, *n*-propyl, *i*-propyl, 2-methyl-ethyl, butyl and its isomers (e.g. *n*-butyl, *i*-butyl and *t*-butyl); pentyl and its isomers, hexyl and its isomers, heptyl and its isomers, octyl and its isomers, nonyl and its isomers, decyl and its isomers, undecyl and its isomers, dodecyl and its isomers, tridecyl and its isomers, tetradecyl and its isomers, pentadecyl and its isomers, hexadecyl and its isomers, heptadecyl and its isomers, octadecyl and its isomers, nonadecyl and its isomers, icosyl and its isomers, and the like.. For example, $C_{1-10}$alkyl includes all linear, or branched alkyl groups having 1 to 10 carbon atoms, and thus includes for example methyl, ethyl, *n*-propyl, *i*-propyl, 2-methyl-ethyl, butyl and its isomers (e.g. *n*-butyl, *i*-butyl and *t*-butyl); pentyl and its isomers, hexyl and its isomers, heptyl and its isomers, octyl and its isomers, nonyl and its isomers, decyl and its isomers and the like. Thus, for example, $C_{1-8}$alkyl groups include all linear, or branched alkyl groups having 1 to 8 carbon atoms, and thus includes for example methyl, ethyl, *n*-propyl, *i*-propyl, 2-methyl-ethyl, butyl and its isomers (e.g. *n*-butyl, *i*-butyl and *t*-butyl); pentyl and its isomers, hexyl and its isomers, heptyl and its isomers, octyl and its isomers, and the like. For example, $C_{1-6}$alkyl includes all linear or branched alkyl groups having 1 to 6 carbon atoms, and thus includes for example methyl, ethyl, *n*-propyl, *i*-propyl, 2-methyl-ethyl, butyl and its isomers (e.g. *n*-butyl, *i*-butyl and *t*-butyl); pentyl and its isomers, hexyl and its isomers, and the like. For example, $C_{1-4}$alkyl includes all linear or branched alkyl groups having 1 to 4 carbon atoms, and thus includes for example methyl, ethyl, *n*-propyl, *i*-propyl, 2-methyl-ethyl, butyl and its isomers (e.g. *n*-butyl, *i*-butyl and *t*-butyl), and the like. When the suffix "ene" is used in conjunction with an alkyl group, i.e. "alkylene", this is intended to mean the alkyl group as defined herein having two single bonds as points of attachment to other groups.

The term "$C_{6-30}$aryl", as a group or part of a group, refers to a polyunsaturated, aromatic hydrocarbyl group having a single ring (i.e. phenyl) or multiple aromatic rings fused together (e.g. naphthalene), or linked covalently, typically containing 6 to 30 atoms; wherein at least one ring is aromatic. The aromatic ring may optionally include one to two additional rings (either cycloalkyl, heterocyclyl or heteroaryl) fused thereto. Examples of suitable aryl include $C_{6-10}$aryl, more preferably $C_{6-8}$aryl. Non-limiting examples of $C_{6-30}$aryl comprise phenyl, biphenylyl, biphenylenyl, or 1-or 2-naphthanelyl; 5- or 6-tetralinyl, 1-, 2-, 3-, 4-, 5-, 6-, 7- or 8-azulenyl, 4-, 5-, 6 or 7-indenyl, 4- or 5-indanyl, 5-, 6-, 7- or 8-tetrahydronaphthyl, 1,2,3,4-tetrahydronaphthyl, and 1,4-dihydronaphthyl. When the suffix "ene" is used in conjunction with an aryl group, this is intended to mean the aryl group as defined herein having two single bonds as points of attachment to other groups. Suitable arylene groups include 1,4-phenylene, 1,2-phenylene, 1,3-phenylene, biphenylylene, naphthylene, indenylene, and the like.

The term "$C_{6-30}$aryl$C_{1-20}$alkyl", as a group or part of a group, means a $C_{1-20}$alkyl as defined herein, wherein at least one hydrogen atom is replaced by at least one $C_{6-30}$aryl as defined herein. Non-limiting examples of $C_{6-30}$aryl$C_{1-20}$alkyl group include benzyl, phenethyl, dibenzylmethyl, methylphenylmethyl, 3-(2-naphthyl)-butyl, and the like.

The term "hydroxyl" or "hydroxy" as used herein refers to the group -OH.

The terms described above and others used in the specification are well understood to those in the art.

In accordance with the present invention, a process is provided for the preparation of a composition comprising polylactide and lactide. Said process is performed by ring-opening polymerization of lactide. The process of the invention comprises the steps of: providing lactide and a polymerization catalyst to a reactor, melt polymerizing said lactide to a degree of polymerization (also synonymously referred as "degree of conversion" or "conversion") of at most 96.0 %, for example at most 95.0 %, for example at most 90.0 %, to form a composition comprising polylactide and lactide, and removing said composition from the reactor, wherein the whole process is performed at pressures of at least 1 bar, and wherein the composition removed from the reactor is never subjected to pressures below 1 bar. Preferably, the prepared composition comprises at least 4.0 % by weight of lactide, preferably at least 5.0 % by weight, preferably at least 10.0 % by weight, based on the total weight of the composition.

Preferably, the process of the invention comprises the steps of: providing lactide and polymerization catalyst to a reactor, melt polymerizing said lactide to a degree of conversion of at most 96.0 %, for example at most 95.0 %, for example at most 90.0 %, to form a composition comprising polylactide and lactide, and removing said composition from the reactor, wherein the whole process is performed at pressures of at least 1 bar, and wherein the composition removed from the reactor is not subjected to one or more devolatilization steps, wherein preferably, the obtained and dried composition comprises at least 4.0 % by weight of lactide, preferably at least 5.0 % by weight, preferably at least 10.0 % by weight of lactide, based on the total weight of the composition.

More preferably, the process of the invention comprises the steps of: providing lactide and polymerization catalyst to a reactor, melt polymerizing said lactide to a degree of polymerization of below 96.0 %, to form a composition comprising polylactide and lactide, and removing said composition from the reactor, wherein the whole process is performed at pressures of at least 1 bar, and wherein the composition removed from the reactor is not subjected to one or more devolatilization steps, at a pressure below 1 bar.

The present invention pertains to the preparation of a composition using polymerization carried out in the substantial absence of solvent, namely to melt-polymerization. If so desired minor amounts of solvent may be present in the process, e.g. added as a solvent for the catalyst or further reaction components. The process is intended to encompass situations where the reaction mixture contains less than 5 % by weight of solvent, in particular less than 2 % by weight, more in particular less than 1 % by weight, still more in particular less than 0.5 % by weight of solvent.

The polymerization process can be batch melt process or a continuous melt process.

The polymerization is preferably performed in inert conditions, such as under a dry nitrogen or argon blanket.

The ring-opening polymerization can be performed at a temperature of at least 100°C. For example the polymerization can be performed at a temperature ranging from 100°C-240°C, preferably from 100°C-220°C, yet more preferably from 100°C-200°C.

In some preferred embodiments, the process is a continuous melt process, and comprises the steps of a) continuously providing lactide and polymerization catalyst and optionally a co-initiator, to a first polymerization reactor for a polymerization, b) continuously removing polymerized reaction mixture from the first polymerization reactor and continuously providing polymerized reaction mixture to a second polymerization reactor, wherein the reaction mixture is further polymerized to a degree of polymerization of at most 96.0 % to form the composition, and c) continuously removing the composition from the polymerization reactor.

Both the polymerization in the first polymerization reactor and the polymerization in the second polymerization reactor can be performed in inert conditions, such as under a dry nitrogen or argon blanket.

The ring-opening polymerization in the first polymerization reactor and the polymerization in the second polymerization reactor can be performed at a temperature of at least 100°C, preferably at a temperature ranging from 100°C-240°C, preferably from 100°C-220°C, yet more preferably from 100°C-200°C. The temperature in both polymerization reactors may be the same or different.

In some embodiment, when a first polymerization is used, lactide and polymerization catalyst can be continuously provided to a continuous mixing reactor, as first polymerization reactor. Suitable continuous mixing reactors include continuously stirred tank reactors and loop reactors, both of which are known in the art. Polymerization in a loop reactor can be preferred. In some embodiments, the first polymerization reactor can comprises static mixing elements.

The degree of polymerization in the first reactor can be generally at least 5 % by weight, more in particular at least 10 % by weight. The degree of polymerization may be as high as 50 % by weight, or even as high as 60 % by weight.

The second polymerization reactor can be also equipped with static mixing elements. In one embodiment, the first polymerization and/or the second polymerization reactor are static mixer reactors. That is, reactors equipped with static mixing elements. Suitable static mixing elements are known in the art, examples thereof are described in US 4,314,606.

The second polymerization reactor can be a plug flow reactor. The first polymerized reaction mixture can be continuously withdrawn from the first polymerization reactor and continuously provided to a plug flow reactor, where it is polymerized further to a degree of polymerization of at most 96.0 %. The plug flow reactor can be equipped with static mixing elements. The plug flow reactor can be placed vertically or tilted.

In some preferred embodiments, the process is a continuous melt process, and comprises the steps of a) continuously providing lactide and polymerization catalyst to a continuous mixing reactor for a first polymerization, b) continuously removing first polymerized reaction mixture from the continuous mixing reactor and continuously providing first polymerized reaction mixture to a plug flow reactor, wherein the reaction mixture is polymerized to a degree of polymerization of at most 96.0 % to form the composition, and c) continuously removing the composition from the plug flow reactor.

The main reactants provided to the reactor include lactide and polymerization catalyst. If so desired, additional components such as co-catalyst, initiator for molecular weight control and/or additives may also be added. The components can be added to the reactor directly, either pure or in a solvent, or (some of) the reactants may be combined prior to addition to the reactor. The point of addition of the additives will depend on the function of the additive; antioxidants may for example be added prior to the first polymerization, whereas catalyst deactivators are generally added after the polymerization is completed.

Lactide for use in the process includes L-lactide, which is a cyclic dimer of L-lactic acid; D-lactide, which is a cyclic dimer of D-lactic acid; meso-lactide, which is a cyclic dimer of D-lactic acid and L-lactic acid; and DL-lactide, which is a racemate of D-lactide and L-lactide. Mixtures of the aforementioned lactides are also suitable for use in the process.

Random copolymers made from meso-lactide generally result in an atactic primary structure referred to as poly(meso-lactide) (PmesoLA) and are amorphous. Random optical copolymers made from equimolar amounts of D-lactide and L-lactide are referred to as poly(rac-lactide) and are also amorphous, unless stereoselective catalyst are employed upon which a wealth of structures are possible with varying thermal properties. The term "L-lactide" or "L-L-lactide" refers to ($S$,$S$)-lactide and is the cyclic di-ester of two lactic acid $S$ enantiomers. The term "D-lactide" or "D-D-lactide" refers to ($R$,$R$)-lactide and is a cyclic di-ester of two lactic acid $R$ enantiomers.

The polymerization catalyst employed for this process may have general formula $M(Y^1,Y^2, ... Y^p)_q$, in which M is a metal selected from the group comprising the elements of columns 3 to 12 of the periodic table of the elements, as well as the elements Al, Ga, In, Tl, Ge, Sn, Pb, Sb, Ca, Mg and Bi; whereas $Y^1$, $Y^2$, ... $Y^p$ are each substituents selected from the group comprising alkyl with 1 to 20 carbon atoms, aryl having from 6 to 30 carbon atoms, alkoxy having from 1 to 20 carbon atoms, aryloxy having from 6 to 30 carbon atoms, and other oxide, carboxylate, and halide groups as well as elements of group 15 and/or 16 of the periodic table; p and q are integers of from 1 to 6. As examples of suitable catalysts, we may notably mention the catalysts of Sn, Ti, Zr, Zn, and Bi; preferably an alkoxide or a carboxylate and more preferably $Sn(Oct)_2$, $Ti(OiPr)_4$, $Ti(2\text{-ethylhexanoate})_4$, $Ti(2\text{-ethylhexyloxide})_4$, $Zr(OiPr)_4$, Zirkonium tris(phenolates) as mentioned in WO2014177543, (2,4-di-tert-butyl-6-(((2-(dimethylamino) ethyl)(methyl)amino)methyl)phenoxy) (ethoxy)zinc, or Zn(lactate)$_2$.

The catalyst concentration can be generally at least 5 ppm, calculated as metal weight, more in particular at least 10 ppm, for example at least 30 ppm, for example at least 40 ppm. The catalyst concentration can be generally at most 300 ppm, in particular at most 150 ppm. If so desired, co-catalyst may be added to the lactide and the catalyst, that is, a compound that further increases the polymerization rate. Suitable co-catalysts are known in the art. Reference is made, for example, to US 6,166,169.

The process can be performed in the presence of a co-initiator of formula $R^1$-OH, wherein $R^1$ is selected from the group consisting of $C_{1-20}$alkyl, $C_{6-30}$aryl, and $C_{6-30}$aryl$C_{1-20}$alkyl optionally substituted by one or more substituents selected from the group consisting of halogen, hydroxyl, and $C_{1-6}$alkyl. Preferably, $R^1$ is selected from $C_{3-12}$alkyl, $C_{6-10}$aryl, and $C_{6-10}$aryl$C_{1-12}$alkyl, optionally substituted by one or more substituents, each independently selected from the group consisting of halogen, hydroxyl, and $C_{1-6}$alkyl; preferably, $R^1$ is selected from $C_{3-12}$alkyl, $C_{6-10}$aryl, and $C_{6-10}$aryl$C_{1-12}$alkyl, optionally substituted by one or more substituents, each independently selected from the group consisting of halogen, hydroxyl and $C_{1-4}$alkyl. The initiator can be an alcohol. The alcohol can be a polyol such as diol, triol or higher functionality polyhydric alcohol. The alcohol may be derived from biomass such as for instance glycerol or propanediol or any other sugar-based alcohol such as for example erythritol. The alcohol can be used alone or in combination with another alcohol. In an embodiment, non-limiting examples of initiators include 1-octanol, 1-decanol, isopropanol, propanediol, trimethylolpropane, 2-butanol, 3-buten-2-ol, 1,3-butanediol, 1,4-butanediol, 1,6-hexanediol, 1,7-heptanediol, benzyl alcohol, 4-bromophenol,1,4-benzenedimethanol, and (4-trifluoromethyl)benzyl alcohol; preferably, said compound is selected from 1-octanol, isopropanol, and 1,4-butanediol.

Selection of an appropriate co-catalyst, initiator and optional additives such as anti-oxidants, phosphates, epoxidised vegetable oil, plasticisers, catkillers, etcetera, is within the scope of the person skilled in the art.

In step b) of the process the polymerization reaction is carried out further until a conversion of at most 96.0 % is obtained, calculated on the starting lactide. Conversion is to be determined directly after polymerization or real-time by online techniques such as mid-IR, near-IR and Raman spectroscopy.

Preferably, the prepared composition comprises at least 4.0 % by weight of lactide, preferably at least 5.0 % by weight, preferably at least 10.0 % by weight, based on the total weight of the composition. For higher lactide concentrations, polymerization settings can be adjusted to decrease the conversion rate of the lactide polymerization process. Settings may include polymerization temperature, catalyst and initiator concentration and process throughput. For example, the catalyst deactivator dosing point can be positioned further down-stream in the process.

The composition may be subjected to a stabilization step. Stabilization step comprises treatment of the composition as obtained from the reactor with compounds that increase the stability of the compound against further polymerization, depolymerization, discoloring and degradation in general. Examples of suitable compounds for stabilization are organic peroxides, anti-oxidants such as phosphite-containing compounds, multi-functional carboxylic acids, hindered phenolic compounds, catalyst deactivating agents such as hindered alkyl, aryl and phenolic hydrazides, amides of aliphatic and aromatic mono- and dicarboxylic acids, cyclic amides, hydrazones and bishydrazones of aliphatic and aromatic aldehydes, hydrazides of aliphatic and aromatic mono- and dicarboxylic acids, bis-acylated hydrazine derivatives, heterocyclic compounds, endcapping with anhydrides, and mixtures thereof. The polymer is treated with the stabilization compounds by admixing the stabilizing compound with the composition, e.g., at a temperature of the same order as the polymerization temperature. This can be done by means of a static mixer, an extruder, or any other conventional way of mixing materials of which at least one is highly viscous. In some preferred embodiments, the polymerization is stopped by addition of one or more catalyst deactivator.

The composition formed is then removed from the polymerization reactor.

According to a preferred embodiment of the invention, the composition obtained is not subjected to a devolatilization step, and if residence time in devolatilizers is used they are used at a pressure of at least 1 bar. The composition is therefore not subjected to a pressure below 1 bar.

Examples of devolatilizers include extruders, especially twin screw extruders, wiped film evaporators, falling film evaporators, rotary devolatilizers, rotary disk devolatilizers, centrifugal devolatilizers, flat plate devolatilizers, and static expansion chambers, such as those involving special distributors, e.g., Sulzer devolatilization technology as described in EP1800724.

The composition can be dried. Optionally, a crystallization step may be performed before the drying step. Due to the high levels of lactide in the final composition, care has to be taken that no lactide sublimation occurs at undesired locations. To avoid occurrence of such phenomena a number of steps can be taken including prevention of cold spots, use of low crystallization and drying temperatures as well as high pressures (>1 bar) during optional crystallization and drying.

The composition can then be directly further processed to end-use by extrusion, blow-molding, film casting, film blowing, thermoforming, foaming, or fiber-spinning at elevated temperatures to form useful articles. If so desired, the polymer may be compounded with additives such as anti-oxidants, nucleating agents, mineral fillers, glass or natural fibers, processing aids, UV-stabilizers, or other polymer-additives known to the skilled person.

It is also possible to process the composition into particles such as beads, chips, or other pelletized or powdered products in manners known in the art and then sold to end-users.

The composition preferably comprises polylactide and at least 4.0 % by weight of lactide, for example at least 5.0 % by weight of lactide, for example at least 10.0 % by weight of lactide. The absolute weight average molecular weight ($M_w$) of the polylactide in the final composition can be generally at least 10 kg/mol, for example at least 40 kg/mol, for example ranging from 40 to 550 kg/mol, for example from 50 to 350 kg/mol, for example from 50 to 300 kg/mol, and for example from 50 to 200 kg/mol.

The present inventors have shown that a composition comprising lactide and PLA can be prepared using a melt processes, wherein the typical PLA degassing step can be omitted and the wherein polymerization does not have to be driven to thermodynamic equilibrium. The present process for preparing lactide and PLA mixture prevents having to mix lactide and PLA via additional extrusion.

Compositions obtainable/obtained by the present process are particularly useful in applications where the composition degrades hydrolytically.

Compositions obtainable/obtained by the present process are also particularly useful in applications related to oil and gas production.

The compositions obtainable/obtained by the present process may be used as diverting agent.

The compositions obtainable/obtained by the present process may also be used as an acid release agent.

The present invention can be further illustrated by the following examples, although it will be understood that these examples are included merely for purposes of illustration and are not intended to limit the scope of the invention unless otherwise specifically indicated.

### EXAMPLES

Unless otherwise indicated, all parts and all percentages in the following examples, as well as throughout the specification, are parts by weight or percentages by weight respectively.

### Methods

Inherent viscosities of the different samples were determined by the following method, compliant with DIN 51562.

Solutions of PLA/lactide mixtures were made by weighing a prescribed amount of PLA into a 50 mL flask. 25 mL of chloroform was added after which the flak was shaken in a shaker for at least 4 h, until the sample was visually dissolved. Next, the flask was filled to a volume of exactly 50 mL and was homogenized by hand shaking. The concentration of the sample was chosen from the expected inherent viscosity, guided by the following Table 1.

Table 1: Choice of concentration by expected inherent viscosity

| Inherent viscosity (dl/g) | Concentration (g/dL) |
| --- | --- |
| $\eta_{inh} < 0.2$ | $2.00 \pm 0.02$ |
| $0.2 \leq \eta_{inh} < 0.3$ | $1.000 \pm 00.2$ |
| $0.3 \leq \eta_{inh} < 1.0$ | $0.500 \pm 0.02$ |
| $\eta_{inh} \geq 1.0$ | $0.1000 \pm 0.02$ |

For most samples a concentration of 0.1000 g/dL was taken.

Then 15-20 mL of the solution (or solvent only, for the blank measurement) was placed in an SI Analytical Ubbelohde DIN type 0c glass capillary viscometer (constant K = 0.003) and placed in a thermostated water bath set and maintained at 25 +/- 0.1°C for at least one hour. Next, elution times of both the solvent and the solution under investigation were determined in duplicate.

The inherent viscosity in dL/g of the sample is then calculated by formula (1)

$$\eta_{inh} = \frac{ln\ \eta_{rel}}{c} \qquad (1)$$

wherein $c$ is the concentration of the sample in g/dL and $\eta_{rel}$ is given by (2)

$$\eta_{rel} = \frac{\eta}{\eta_s} = \frac{t}{t_0} \qquad (2)$$

wherein $\eta$ is the viscosity of the solution and $\eta_s$ is the viscosity of the solvent, $t$ is the elution time of the sample in solution, while $t_0$ is the elution time of the solvent.

Absolute molecular weight parameters $M_n$, $M_w$ and polydispersity index PDI were determined using Gel Permeation Chromatography (GPC) on a Viscotek GPC Mx VE2001 system with 1,1,1,3,3,3-Hexafluoro-2-propanol (hexafluoroisopropanol or HF$i$P) and 0.02 M $CF_3COOK$ as solvent at a flow rate of 0.7 mL/min. Size exclusion columns were two PSS PFG analytical linear columns (M, 300 x 8.00 mm, 7 μm) in series.

The amount of residual lactide in a sample was determined using a precipitative method where PLA and lactide oligomers are decanted from the solvent containing lactide. Using GC analysis, the amount of lactide in the original sample could then be determined. Those skilled in the art will recognize the possibility to measure the amount of lactide in PLA via various other methods, including $^1$H-NMR, $m$-IR, $n$-IR and Raman spectroscopy.

**1. Examples according to the Invention**

1.1 Batch polymerization

A batch polymerization of L-lactide was performed in a 2 L batch reactor. First 750 g of L-lactide (PuraLact L, Total Corbion PLA) was allowed to melt at 130°C after which the polymerization was started by addition of 150 ppm of tin octoate (Sigma Aldrich, 92.5-100 %). No co-initiator was used in order to obtain the highest molecular weight possible. After addition of the tin octoate the reactor was put under 4 bar nitrogen pressure and its contents was heated within 10 min to 180°C. Polymerization was allowed to proceed for 60 min until a conversion of 65 % was reached. The conversion was estimated by observing torque increase, which was correlated to conversion through earlier experiments performed with the same chemicals and settings. The accurate conversion however was measured via the precipitative GC method mentioned. The polymerization was terminated by addition of 1000 ppm of Doverphos S680 (partially hydrolyzed to an acid number of 1.5 mg KOH/g, Dover Chem). After 10 min of further mixing, the highly viscous reactor contents were offloaded using nitrogen pressure into a stainless steel bucket which in turn was placed in ice/water baths to quench the reaction mixture.

1.2 Continuous melt process

A continuous melt process was performed using a continuous PLA melt polymerization process. This process was based on static mixers and static reactors and basically comprised a loop reactor, a plug flow reactor and two devolatilization vessels. L-lactide (Puralact L, Total Corbion PLA) was molten and fed at a throughput of 80 kg/h at 130°C into a loop reactor which was heated by an oil-heat transfer unit at 188°C. At the same addition point, 50 ppm of tin octoate (DABCO T-9, Air Products) and 170 g/h of 2-ethyl-1-hexanol (>99.5 % purity, Brenntag) were dosed into the loop reactor. The circulation rate of the loop reactor was 940 kg/h to achieve proper mixing and average residence time was 31 min. Material was then fed into the plug flow reactor with a residence time of 96 min and temperature was gradually increased to 210°C to decrease material viscosity and plant pressures. Typical process pressures as such were 8-10 bar in the loop reactor and 32-37 bar in the plug flow reactor. At the end of the plug flow reactor 80 g/hr of Adeka Stab AX-71 (Adeka Polymer Additives) was added to terminate the polymerization reaction and stabilize the polymer against lactide reformation.

Both devolatilization vessels were kept at atmospheric pressure and material was thereafter pelletized, crystallized at 100°C and dried. Molecular weight of the PLA pellets such produced was measured by absolute GPC measurements and residual lactide was determined.

Samples were collected and vacuum sealed in moisture-proof bags and subsequently submitted to solution viscosity measurements as described herein above.

The samples generated according to embodiments of the invention have the properties listed in Table 2.

Table 2

| Compositions | Absolute $M_w$ of PLA fraction (kg/mol) | Lactide content (%) | Inherent Viscosity (dL/g) |
|---|---|---|---|
| Experimental batch | 130 | 35 | 1.1 |
| Experimental continuous | 106 | 5.4 | 1.4 |

**2. Comparative Examples**

In a Brabender kneader (Type W50E, with Banburry mixers), pre-heated at 180°C, different mixtures of commercial PLA samples (Luminy®, Total Corbion PLA bv) were melt mixed with L-lactide (Puralact L, Total Corbion PLA bv) by kneading to mimic existing extrusion processes that achieve the same, albeit in continuous throughput mode. PLA pellets were first dried to <250 ppm moisture in a Motan MDE40 desiccant air dryer overnight at 85°C at a dew point of -40°C.

Samples were collected and vacuum sealed in moisture-proof bags and subsequently submitted to solution viscosity measurements as described herein above.

The amount of residual lactide in a sample was determined using a precipitative method where PLA and lactide oligomers are decanted from the solvent containing lactide. Using GC analysis, the amount of lactide in the original sample could then be determined.

These comparative Examples were analyzed and their properties are shown in Table 3.

Table 3: Comparative Examples

| Composition | Absolute $M_w$ of PLA fraction (kg/mol) | Lactide content (%) | Inherent Viscosity (dL/g) |
|---|---|---|---|
| Luminy L105 + Lactide | 64 | 0.42 | 1.1 |
| Luminy L105 + Lactide | 64 | 7.6 | 1.0 |
| Luminy L105 + Lactide | 64 | 18 | 0.9 |
| Luminy L105 + Lactide | 64 | 27 | 0.8 |
| Luminy L105 + Lactide | 64 | 38 | 0.7 |
| Luminy L175 + Lactide | 120 | 0.23 | 1.6 |
| Luminy L175 + Lactide | 120 | 9.6 | 1.3 |
| Luminy L175 + Lactide | 120 | 19 | 1.2 |
| Luminy L175 + Lactide | 120 | 28 | 1.1 |
| Luminy L175 + Lactide | 120 | 38 | 0.9 |

**Claims**

1. Process for the preparation of a composition comprising polylactide and lactide by ring-opening polymerization of lactide, said process comprising the steps of : (a) providing lactide and polymerization catalyst to a reactor, (b) melt polymerizing said lactide to a degree of polymerization of at most 96.0 %, to form a composition comprising polylactide and lactide, and (c) removing said composition from the reactor, wherein the whole process is performed at pressures of at least 1 bar, and wherein the composition removed from the reactor is never subjected to a pressure below 1 bar and wherein the composition is not subjected to one of more devolatilization steps.

2. Process according to claim 1, wherein the composition comprises at least 4.0 % by weight of lactide, preferably at least 5.0 % by weight based on the total weight of the composition.

3. Process according to any one of claims 1-2, wherein the polymerization is stopped by addition of a catalyst deactivator.

4. Process according to any one of claims 1-3, wherein the polymerization process is a batch melt process or a continuous melt process.

**5.** Process according to any one of claims 1-4, comprising the steps of a) continuously providing lactide and polymerization catalyst to a continuous mixing reactor for a first - polymerization, b) continuously removing said first polymerized reaction mixture from the continuous mixing reactor and continuously providing said first polymerized reaction mixture to a plug flow reactor, wherein the reaction mixture is polymerized to a degree of polymerization of at most 96.0 % to form the composition, and c) continuously removing the composition from the plug flow reactor.

**6.** Process according to claim 5, wherein the first reactor is a loop reactor.

**7.** Process according to claim 5, wherein the first reactor is a continuously stirred tank reactor

**8.** Process according to claim 5, wherein the continuous mixing reactor and/or the plug flow reactor is a static mixer reactor.

**9.** Process according to any one of claims 1-8, wherein the composition removed from the plug flow reactor is not subjected to a devolatilization step, or if one or more devolatilization vessels are used they are kept at a pressure of at least 1 bar.

**10.** Process according to any one of claims 1-9, wherein the polymerization is performed at a temperature of at least 100°C.

## Patentansprüche

**1.** Verfahren zur Herstellung einer Zusammensetzung, die Polylactid und Lactid umfasst, durch ringöffnende Polymerisation von Lactid, wobei das Verfahren die folgenden Schritte umfasst: (a) Bereitstellen von Lactid und Polymerisationskatalysator an einen Reaktor, (b) Schmelzpolymerisieren des Lactids bis zu einem Polymerisationsgrad von höchstens 96,0 %, um eine Zusammensetzung zu bilden, die Polylactid und Lactid umfasst, und (c) Entfernen der Zusammensetzung aus dem Reaktor, wobei das gesamte Verfahren bei Drücken von mindestens 1 bar durchgeführt wird und wobei die aus dem Reaktor entfernte Zusammensetzung nie einem Druck unter 1 bar ausgesetzt wird und wobei die Zusammensetzung nicht einem oder mehreren Devolatilisierungsschritten ausgesetzt wird.

**2.** Verfahren nach Anspruch 1, wobei die Zusammensetzung zu mindestens 4,0 Gew.-% Lactid, vorzugsweise mindestens 5,0 Gew.-%, bezogen auf das Gesamtgewicht der Zusammensetzung, umfasst.

**3.** Verfahren nach einem der Ansprüche 1-2, wobei die Polymerisation durch Zugabe eines Katalysatordeaktivators gestoppt wird.

**4.** Verfahren nach einem der Ansprüche 1-3, wobei das Polymerisationsverfahren ein Batch-Schmelzverfahren oder ein kontinuierliches Schmelzverfahren ist.

**5.** Verfahren nach einem der Ansprüche 1-4, umfassend die Schritte des a) kontinuierlichen Bereitstellens von Lactid und Polymerisationskatalysator an einen kontinuierlichen Mischreaktor für eine erste-Polymerisation, b) kontinuierlichen Entfernens des ersten polymerisierten Reaktionsgemischs aus dem kontinuierlichen Mischreaktor und kontinuierlichen Bereitstellens des ersten polymerisierten Reaktionsgemischs an einen Pfropfenstromreaktor, wobei das Reaktionsgemisch bis zu einem Polymerisationsgrad von höchstens 96,0 % polymerisiert wird, um die Zusammensetzung zu bilden, und c) des kontinuierlichen Entfernens der Zusammensetzung aus dem Pfropfenstromreaktor.

**6.** Verfahren nach Anspruch 5, wobei der erste Reaktor ein Schlaufenreaktor ist.

**7.** Verfahren nach Anspruch 5, wobei der erste Reaktor ein kontinuierlicher Rührkesselreaktor ist.

**8.** Verfahren nach Anspruch 5, wobei der kontinuierliche Mischreaktor und/oder der Pfropfenstromreaktor ein Statikmischerreaktor ist.

**9.** Verfahren nach einem der Ansprüche 1-8, wobei die aus dem Pfropfenstromreaktor entfernte Zusammensetzung keinem Devolatilisierungsschritt ausgesetzt wird oder, wenn ein oder mehrere Devolatilisierungsgefäße verwendet werden, sie bei einem Druck von mindestens 1 bar gehalten werden.

**10.** Verfahren nach einem der Ansprüche 1-9, wobei die Polymerisation bei einer Temperatur von mindestens 100 °C durchgeführt wird.

**Revendications**

**1.** Procédé de préparation d'une composition comprenant du polylactide et du lactide par polymérisation par ouverture de cycle de lactide, ledit procédé comprenant les étapes consistant à : (a) fournir du lactide et un catalyseur de polymérisation à un réacteur, (b) polymériser à l'état fondu ledit lactide jusqu'à un degré de polymérisation d'au plus 96,0 %, pour former une composition comprenant du polylactide et du lactide, et (c) retirer ladite composition du réacteur, dans lequel l'ensemble du procédé est effectué à des pressions d'au moins 1 bar, et dans lequel la composition retirée du réacteur n'est jamais soumise à une pression inférieure à 1 bar et dans lequel la composition n'est pas soumise à une ou plusieurs étapes de dévolatilisation.

**2.** Procédé selon la revendication 1, dans lequel la composition comprend au moins 4,0 % en poids de lactide, de préférence au moins 5,0 % en poids par rapport au poids total de la composition.

**3.** Procédé selon l'une quelconque des revendications 1 et 2, dans lequel la polymérisation est arrêtée par ajout d'un désactivateur de catalyseur.

**4.** Procédé selon l'une quelconque des revendications 1 à 3, dans lequel le procédé de polymérisation est un procédé en fusion discontinu ou un procédé en fusion continu.

**5.** Procédé selon l'une quelconque des revendications 1 à 4, comprenant les étapes consistant à a) fournir en continu du lactide et un catalyseur de polymérisation à un réacteur de mélange en continu pour une première-polymérisation, b) retirer en continu ledit premier mélange réactionnel polymérisé du réacteur de mélange en continu et fournir en continu ledit premier mélange réactionnel polymérisé à un réacteur à écoulement piston, dans lequel le mélange réactionnel est polymérisé jusqu'à un degré de polymérisation d'au plus 96,0 % pour former la composition, et c) retirer en continu la composition du réacteur à écoulement piston.

**6.** Procédé selon la revendication 5, dans lequel le premier réacteur est un réacteur en boucle.

**7.** Procédé selon la revendication 5, dans lequel le premier réacteur est un réacteur à cuve agitée en continu.

**8.** Procédé selon la revendication 5, dans lequel le réacteur de mélange en continu et/ou le réacteur à écoulement piston est un réacteur mélangeur statique.

**9.** Procédé selon l'une quelconque des revendications 1 à 8, dans lequel la composition retirée du réacteur à écoulement piston n'est pas soumise à une étape de dévolatilisation, ou si un ou plusieurs récipients de dévolatilisation sont utilisés, ils sont maintenus à une pression d'au moins 1 bar.

**10.** Procédé selon l'une quelconque des revendications 1 à 9, dans lequel la polymérisation est effectuée à une température d'au moins 100 °C.

**EP 3 814 399 B1**

**REFERENCES CITED IN THE DESCRIPTION**

**Patent documents cited in the description**

- US 2016280908 A
- WO 2015086613 A
- WO 2016041722 A
- US 4314606 A
- WO 2014177543 A
- US 6166169 A
- EP 1800724 A